(19) Europäisches Patentamt
European Patent Office
Office européen des brevets

(11) **EP 4 538 937 A1**

(12) **EUROPEAN PATENT APPLICATION**

(43) Date of publication:
**16.04.2025 Bulletin 2025/16**

(21) Application number: **23306781.8**

(22) Date of filing: **12.10.2023**

(51) International Patent Classification (IPC):
**G06N 5/045** $^{(2023.01)}$  **G06N 20/00** $^{(2019.01)}$
**G06N 7/01** $^{(2023.01)}$

(52) Cooperative Patent Classification (CPC):
**G06N 5/045**; G06N 7/01; G06N 20/00

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **CRAFT.AI**
**75006 Paris (FR)**

(72) Inventors:
• ZIMMERMANN, Bastien
  75006 Paris (FR)
• BOUSSARD, Matthieu
  75006 Paris (FR)
• PELLISSIER, François
  75006 Paris (FR)
• BECHARAT, Chahram
  75006 Paris (FR)

(74) Representative: **Icosa**
**83 avenue Denfert-Rochereau**
**75014 Paris (FR)**

(54) **DEVICE FOR PROVIDING A COUNTERFACTUAL EXPLANATION OF AN ORIGINAL DECISION FROM AN AUTOMATED DECISION-MAKING SYSTEM AND RELATED METHOD**

(57)     The present invention relates to a device (1) for providing a counterfactual explanation (E) of an original decision (D) from an automated decision-making system based on a model of classifier type for decision optimization.

**FIG. 1**

**EP 4 538 937 A1**

**Description**

**FIELD OF INVENTION**

The present invention relates to explainable artificial intelligence.

More specifically, the present invention relates to a device for providing a counterfactual explanation of an original decision from an automated decision-making system and to a related method.

**BACKGROUND OF INVENTION**

Explainable Artificial Intelligence (XAI) is an emerging area of research in the field of Artificial Intelligence. XAI can explain how Artificial Intelligence obtained a particular solution (e.g., classification or object detection). Explainability is essential for critical applications, such as defense, health care, law and order, and autonomous driving vehicles, etc., where the know-how is required for trust and transparency.

In the context of models producing automated decisions, many different solutions exist to provide insight into the model's inner workings. Problematically, these explanations do not pride actionable recommendations, that is, the information present in the explanation does not translate into guidance on changing a model's decision.

Another field of solutions is dedicated to providing counterfactual explanations, that is, explanations that provide guidance to change the model decision. Similarly, these explanations do not provide proper insight into what led a model to a specific automated decision.

Therefore, there is a need for solutions combining both approaches and providing explanations that illustrate a model's workings and can translate into changing the model's decisions.

The invention aims at providing such a solution.

**SUMMARY**

This invention thus relates to a device for providing a counterfactual explanation of an original decision from an automated decision-making system based on a model of classifier type for decision optimization, comprising:

- at least one input interface configured to receive a training dataset of given distribution;
- at least one processor configured to:

    - train the model based on the training dataset so as to obtain a trained model;
    - obtain the original decision from an implementation of the trained model receiving as input an instance referred to as original instance;
    - obtain causal knowledge relating to the trained model;
    - determine at least one sub-dataset sampled from a so-called prior dataset, the prior dataset being sampled from the given distribution;
    - compute, for each among the at least one sub-dataset, at least one corresponding set of Shapley values relating to the model by using at least one Shapley values computing method and based on the at least one sub-dataset and the causal knowledge, so as to obtain at least one computation environment, the at least one computation environment comprising one among the at least one sub-dataset and one among the at least one Shapley values computing method;
    - determine one optimal computation environment among the at least one computation environment by means of at least one metric representative of an ability of the corresponding computation environment to provide counterfactual explanations;
    - determine the counterfactual explanation in the shape of a counterfactual instance or of a set of contributing features by means of Shapley values corresponding to the original instance within the optimal computation environment and referred to as optimal Shapley values;

- at least one output interface configured to output the counterfactual explanation.

Therefore, the device previously described advantageously uses the concept of Shapley values originating from the cooperative game theory to determine an optimal computation environment and to determine, by using this computation environment, a counterfactual explanation. The concept of Shapley values is used herein to make the most contributing players correspond to the most contributing features of a model of classifier type serving as automated decision-making system. By similarity, the Shapley values used in the present disclosure represent the marginal contribution of each feature to a decision outputted by a machine learning model. The counterfactual explanation is meant to enable a user to change the original decision. In other terms, the device aims at providing an explanation that is actionable.

More specifically, at least one set of Shapley values is computed by using at least one sub-dataset and at least one Shapley values computation method. The at least one sub-dataset is determined so as to represent a prior of the parameter dataset. An optimal computation environment is determined, which allows adapting computation conditions and providing the most promising conditions to obtain a counterfactual explanation for the original instance. To determine the optimal computation environment, metrics representative of an ability to provide counterfactual explanations are advantageously computed.

In some embodiments, the at least one sub-dataset comprises at least two sub-datasets, so that at least two computation environments are obtained.

In some embodiments, the at least one Shapley values computing method comprises at least two Shapley values computing methods, so that at least two computation environments are obtained.

As a consequence, several computation environments are advantageously tested, using either several sub-datasets and/or several Shapley values computing methods, to find the best conditions to determine a counterfactual explanation. For instance, the optimal environment can be the computation environment having the best success rate, or which can determine induced counterfactuals as close as possible to the original instance, such that the original situation is changed a minimum to change the decision outputted by the model of classifier type.

Besides, the device previously described advantageously uses causal knowledge relating to the trained model when testing the at least one computation environment. This causal knowledge represents additional knowledge to be used by the device that is assumed to help predict the behaviour of the trained model.

In some embodiments, the at least one metric representative of an ability of the corresponding computation environment to provide counterfactual explanations comprises one or more metrics chosen among a success rate, a quantile shift metric evaluating the cost and feasibility of a recourse against a decision, a metric allowing assessing an ability for counterfactual explanation determination improvement, metrics measuring distances between input data points and their corresponding induced counterfactuals.

In some embodiments, the at least one processor is configured to determine the counterfactual explanation by means of a minimum value search guided by a vector comprising the optimal Shapley values under a constraint, the constraint imposing that a decision outputted by the trained model for an instance obtained from a displacement from the original instance along a direction defined by the vector is different from the original decision.

This minimum value search corresponds to the search of the closest instance to the original instance, for which the model of classifier type will output a decision different from the original decision. The minimum value search is advantageously guided by the direction induced by the optimal Shapley values.

In some embodiments, the causal knowledge obtained by the at least one processor is computed by the at least one processor by means of a causal discovery method.

For instance, the causal knowledge is a causal graph.

In some other embodiments, the causal knowledge obtained by the at least one processor comprises knowledge from at least one expert and is received via the at least one input interface.

In some embodiments, the at least one sub-dataset is randomly sampled from the training dataset and belongs to one among:

- a plurality of instances comprising a label corresponding to a decision different from the original decision,
- a plurality of instances associated to decisions inferred by the model, the inferred decisions being different from the original decision,
- a plurality of instances among the k closest neighbors of the original instance according to a predetermined distance metric, the plurality of instances being associated to decisions inferred by the model, the inferred decisions being different from the original decision.

The at least one sub-dataset will be used in the determination of the optimal computation environment. Computing a plurality of sub-datasets will allow increasing the multiplicity of computation environments to be tested to find the optimal computation environment.

In some embodiments, for the at least one sub-dataset, the at least one corresponding set of Shapley values is computed by means of at least one heuristic chosen among Shapley Flow, ASV, Powerset Shapley values and sampling Shapley values.

The at least one corresponding set of Shapley values will be used in the determination of the optimal computation environment. Computing a plurality of sets of Shapley values for a given sub-dataset will allow increasing the multiplicity of computation environments to be tested to find the optimal computation environment.

In some embodiments, the model is a multi-class classifier designed to assign input data points to one of multiple classes, the multiple classes being at least three mutually exclusive classes.

For instance, the model is a gradient boosting Tree model.

In some embodiments, the automated decision-making system is configured to provide decisions relating to medical predictions, banking, statistics, industrial quality inspection, email spam classification, fraud detections, survey feedback.

Another aspect of the invention relates to a computer-implemented method for providing a counterfactual explanation of an original decision from an automated decision-making system based on a model of classifier type for decision optimization, the method comprising:

- receiving a training dataset of given distribution;
- training the model based on the training dataset so as to obtain a trained model;
- obtaining the original decision from an implementation of the trained model receiving as input an instance referred to as original instance;
- obtaining causal knowledge relating to the model;
- determining at least one sub-dataset sampled from a so-called prior dataset said prior dataset being sampled from the given distribution;
- computing, for each among the at least one sub-dataset, at least one corresponding set of Shapley values relating to the model by using at least one Shapley values computing method and based on the at least one sub-dataset and the causal knowledge, so as to obtain at least one computation environment, said at least one computation environment comprising one among said at least one sub-dataset and one among said at least one Shapley values computing method;
- determining one optimal computation environment among said at least one computation environment by means of at least one metric representative of an ability of the corresponding computation environment to provide counterfactual explanations;
- determining the counterfactual explanation in the shape of a counterfactual instance or of a set of contributing features by means of the Shapley values corresponding to the original instance within the optimal computation environment and referred to as optimal Shapley values.

In some embodiments, the computer-implemented method for providing a counterfactual explanation of an original decision is implemented by the device as previously described.

In addition, the disclosure relates to a computer program comprising software code adapted to perform a method for providing a counterfactual explanation of an original decision from an automated decision-making system based on a model of classifier type for decision optimization compliant with any of the above execution modes when the program is executed by a processor.

The present disclosure further pertains to a non-transitory program storage device, readable by a computer, tangibly embodying a program of instructions executable by the computer to perform a method for providing a counterfactual explanation of an original decision from an automated decision-making system based on a model of classifier type for decision optimization, compliant with the present disclosure.

Such a non-transitory program storage device can be, without limitation, an electronic, magnetic, optical, electromagnetic, infrared, or semiconductor device, or any suitable combination of the foregoing. It is to be appreciated that the following, while providing more specific examples, is merely an illustrative and not exhaustive listing as readily appreciated by one of ordinary skill in the art: a portable computer diskette, a hard disk, a ROM, an EPROM (Erasable Programmable ROM) or a Flash memory, a portable CD-ROM (Compact-Disc ROM).

**DEFINITIONS**

In the present invention, the following terms have the following meanings:

The terms **"adapted"** and **"configured"** are used in the present disclosure as broadly encompassing initial configuration, later adaptation or complementation of the present device, or any combination thereof alike, whether effected through material or software means (including firmware).

The term **"processor"** should not be construed to be restricted to hardware capable of executing software, and refers in a general way to a processing device, which can for example include a computer, a microprocessor, an integrated circuit, or a programmable logic device (PLD). The processor may also encompass one or more Graphics Processing Units (GPU), whether exploited for computer graphics and image processing or other functions. Additionally, the instructions and/or data enabling to perform associated and/or resulting functionalities may be stored on any processor-readable medium such as, e.g., an integrated circuit, a hard disk, a CD (Compact Disc), an optical disc such as a DVD (Digital Versatile Disc), a RAM (Random-Access Memory) or a ROM (Read-Only Memory). Instructions may be notably stored in hardware, software, firmware or in any combination thereof.

**"Machine learning (ML)"** designates in a traditional way computer algorithms improving automatically through experience, on the ground of training data enabling to adjust parameters of computer models through gap reductions between expected outputs extracted from the training data and evaluated outputs computed by the computer models.

**"Datasets"** are collections of data used to build an ML mathematical model, so as to make data-driven predictions or decisions. In **"supervised learning"** (i.e. inferring functions from known input-output examples in the form of labelled training data), three types of ML datasets (also designated as ML sets) are typically dedicated to three respective kinds of tasks: **"training",** i.e. fitting the parameters, **"validation",** i.e. tuning ML hyperparameters (which are parameters used to control the learning process), and **"testing",** i.e. checking independently of a training dataset exploited for building a mathematical model that the latter model provides satisfying results.

## BRIEF DESCRIPTION OF THE DRAWINGS

**Figure 1** is a block diagram representing schematically a particular mode of a device for providing a counterfactual explanation of an original decision from an automated decision-making system.

**Figure 2** represents an example of a causal graph.

**Figure 3** is a flow chart showing successive steps executed with the device for providing a counterfactual explanation of an original decision from an automated decision-making system of figure 1.

**Figure 4** is a block diagram representing an example of a device for providing a counterfactual explanation of an original decision from an automated decision-making system according to embodiments of the invention.

**Figure 5** represents the causal graph corresponding to the examples 2 and 3.

## DETAILED DESCRIPTION

The present description illustrates the principles of the present disclosure. It will thus be appreciated that those skilled in the art will be able to devise various arrangements that, although not explicitly described or shown herein, embody the principles of the disclosure and are included within its scope.

All examples and conditional language recited herein are intended for educational purposes to aid the reader in understanding the principles of the disclosure and the concepts contributed by the inventor to furthering the art, and are to be construed as being without limitation to such specifically recited examples and conditions.

Moreover, all statements herein reciting principles, aspects, and embodiments of the disclosure, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

Thus, for example, it will be appreciated by those skilled in the art that the block diagrams presented herein may represent conceptual views of illustrative circuitry embodying the principles of the disclosure. Similarly, it will be appreciated that any flow charts, flow diagrams, and the like represent various processes which may be substantially represented in computer readable media and so executed by a computer or processor, whether or not such computer or processor is explicitly shown.

The functions of the various elements shown in the figures may be provided through the use of dedicated hardware as well as hardware capable of executing software in association with appropriate software. When provided by a processor, the functions may be provided by a single dedicated processor, a single shared processor, or a plurality of individual processors, some of which may be shared.

It should be understood that the elements shown in the figures may be implemented in various forms of hardware, software or combinations thereof. Preferably, these elements are implemented in a combination of hardware and software on one or more appropriately programmed general-purpose devices, which may include a processor, memory and input/output interfaces.

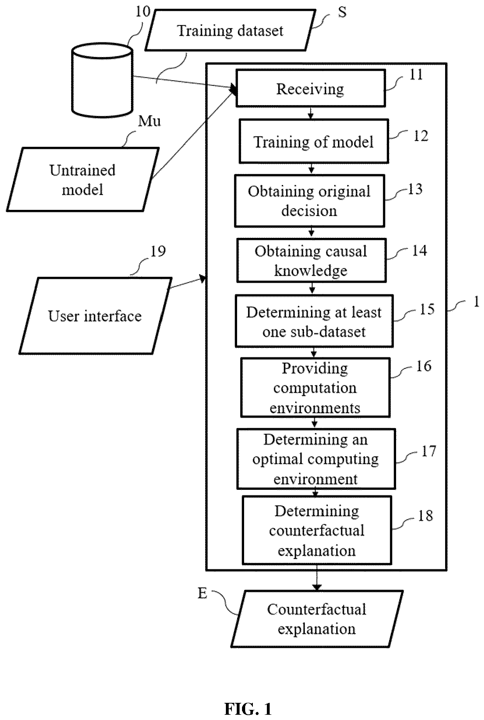

The present disclosure will be described in reference to a particular functional embodiment of a device 1 for providing a counterfactual explanation E of an original decision D from an automated decision-making system based on a model of classifier type for decision optimization, as illustrated on Figure 1.

By counterfactual explanation, it is meant an explanation employed to explain the decision-making process of the model of classifier type. The counterfactual explanation is meant to provide insights into why a particular decision was made and predict how it might have been different if the input had varied. The counterfactual explanation can take different forms.

For instance, the counterfactual explanation E may be a set of N input variables, i.e. an instance, of the model, N being an integer number, making the model outputting a different decision than the original decision. In other words, the counterfactual explanation E is a potential counterfactual instance, that is, a synthetic data point similar to an initial user's data point that is classified differently by the model. The potential counterfactual instance can be for instance the closest data point to the initial user's data point that leads to a different decision when inputted to the model.

In another example, the counterfactual explanation E may be a set of contributing features which most influence the decision outputted by the model. In other words, a variation of one of those contributing features can result in a change in the decision outputted by the model. For instance, the counterfactual explanation E is a set of P features being features of the model, P being strictly inferior to N. Such contributing features can be determined by means of a computation of Shapley values, as will be described later.

The automated decision-making system can for example output decisions pertaining to the fields of banking, medical predictions, statistics, industrial quality inspection, email spam classification, fraud detections, survey feedback. In the field of industrial quality inspection, a question that may be of interest could be: what can be changed to improve the detected quality of my products/parts? In the field of spam classification, it could be of interest to answer the question "why is my email classified as SPAM? In the field of fraud detections, one can ask herself: "why does the system classify this case as fraudulent, and how can it be changes?" In the case of survey feedback, one can ask herself "what could change the feedbacks from the users, or what are the closest positive feedback?"

Though the presently described device 1 is versatile and provided with several functions that can be carried out alternatively or in any cumulative way, other implementations within the scope of the present disclosure include devices having only parts of the present functionalities.

The device 1 is advantageously an apparatus, or a physical part of an apparatus, designed, configured and/or adapted for performing the mentioned functions and produce the mentioned effects or results. In alternative implementations, the device 1 is embodied as a set of apparatus or physical parts of apparatus, whether grouped in a same machine or in different, possibly remote, machines. The device 1 may e.g. have functions distributed over a cloud infrastructure and be available to users as a cloud-based service, or have remote functions accessible through an API.

In what follows, the modules are to be understood as functional entities rather than material, physically distinct, components. They can consequently be embodied either as grouped together in a same tangible and concrete component, or distributed into several such components. Also, each of these modules are possibly themselves shared between at least two physical components. In addition, the modules are implemented in hardware, software, firmware, or any mixed form thereof as well. They are preferably embodied within at least one processor of the device 1.

The device 1 comprises a module 11 for receiving a training dataset S of given distribution called training distribution. The module 11 is further configured for receiving an untrained model of classifier type Mu. The untrained model of classifier type Mu is for instance dedicated for the implementation of an automated decision-making system. The classification function corresponding to the model is referred as f. For instance, the untrained model Mu is a gradient boosting Tree model. Other types of classifiers are possible, for instance decision tree classifiers, Ridge classifiers, Support Vector Machines, Neural Network classifiers.

Optionally, the device 1 may further comprise a module (not represented) for cleaning the data of training dataset S. By "data cleaning", it is meant a process fixing the dataset from incorrect, corrupted or ill-formatted data. Indeed, the data comprised in the training dataset S may be received in a large variety of formats, with possible missing data. The data cleaning process can also include transforming the data to be normalized. This process is desirable for both the training of the machine learning model and for the solving of the optimization problem part that is used in the present disclosure and will be described below.

The device 1 may further comprise a module 12 configured to train the untrained model of classifier type Mu based on the training dataset S, so as to obtain a trained model Mt. Any training method known from the person skilled in the art can be used.

The trained model Mt is configured to receive as input an instance and to output a decision based on the inputted instance. The model Mt may be a binary classifier or a multi-class classifier. The decision outputted by the model Mt corresponds to one class among at least two classes of the model, the class being associated to a corresponding probability.

The device 1 may further comprise a module 13 configured to implement the trained model Mt receiving as input an instance called original instance $x_i$ so as to obtain the original decision D for which the counterfactual explanation E is to be determined. By "instance", it is meant a set of input variables configured to be inputted into the trained model Mt. The original instance $x_i$ may be received by the module 11. Alternatively, the original instance $x_i$ may be received via a user interface of the device 1.

The device 1 may further comprise a module 14 configured to obtain causal knowledge relating to the trained model Mt. By "causal knowledge", it is meant data aiming at providing understanding and modeling of cause-and-effect relationships between variables. Those data involve identifying and capturing the causal mechanisms that generate outcomes of the model.

In some embodiments, the module 14 is configured to obtain causal knowledge by computation via a causal discovery method. For instance, the causal knowledge is a causal graph or a structural causal model comprising a set of equations.

In some other embodiments, the causal knowledge comprises knowledge from at least one expert person and the causal knowledge may be received via a user interface of the device 1. For instance, the causal knowledge may also be a causal graph in this case.

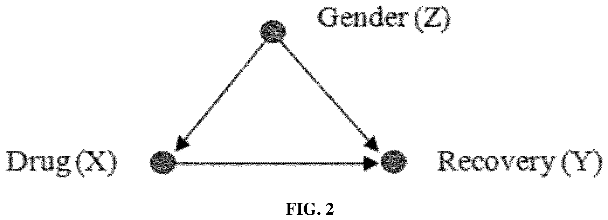

Figure 2 shows an example of a causal graph elaborated by an expert person and for a use case pertaining to the medical field. The causal graph provides a formal and transparent representation of the causal assumption that the expert person may wish to convey and defend. More specifically, the automated decision-making system receives as inputs the gender Z of a patient and a specific drug X to be prescribed to the patient and outputs a prediction Y, positive or negative, about the recovery of the patient given both inputs. The causal graph comprises nodes (here 3 nodes) and edges having a direction (here 3 edges). The final node is commonly referred to as the sink of the causal graph. This example of causal graph expresses that gender confounds the relationships between the choice of the drug and the chances of recovery because it is a cause of both.

The device 1 may further comprise a module 15 for determining at least one sub-dataset comprised in a so-called prior dataset sampled from the given distribution of the training dataset. In some embodiments, the prior dataset corresponds to the training dataset.

In a first example, the at least one sub-dataset is sampled from the prior dataset and comprises a plurality Plab of instances comprising a label (i.e.; real label) corresponding to a decision different from the original decision D.

In a second example, the at least one sub-dataset is sampled from the prior dataset and comprises a plurality Ppred of instances associated to decisions inferred by the trained model Mt that are different from the original decision D.

In a third example, the at least one sub-dataset is sampled from the prior dataset and comprises a plurality Pknn of instances among the k closest neighbors of the original instance according to a predetermined distance metric, k being an integer number, the plurality of instances being associated to decisions inferred by the trained model Mt, and the inferred decisions being different from the original decision D.

In a fourth example, the at least one sub-dataset is sampled from the training dataset S and comprises a plurality of instances Ptrain.

The at least one sub-dataset may consist of one or more plurality of instances among the pluralities Plab, Ppred, Pknn and Ptrain.

Each among the at least one sub-dataset comprises a parameterizable number of instances that can be adjusted given the complexity of the prior dataset. The more complex, the more diverse the prior dataset, the more points will be needed in the at least one sub-dataset. Indeed, the at least one sub-dataset is meant to represent the prior over the data. The term "prior" refers to the statistical concept of initial beliefs or assumptions about a given set of data. As will be seen further, the at least one sub-dataset will be later used by the device 1 to compute Shapley values over a sample from a dataset of distribution close to the distribution of the prior dataset. Therefore, the more points are needed to sample the at least one sub-dataset, so that the prior be strong a heavily influence the computation results. Thus, the more complex the initial data (i.e., training dataset S), the more complex the prior has to be, and the more points are needed in the at least one sub-dataset. For instance, a default value for the number of instances in each among the at least one sub-dataset could be set to 1000 instances.

The device 1 may further comprise a module 16 configured to compute, for each sub-dataset Sdi among the at least one sub-dataset, at least one set Vsik of Shapley values relating to the trained model Mt and for a given evaluation dataset of distribution close to the distribution of the training dataset S, based on the corresponding sub-dataset Sdi and the causal knowledge and by using a Shapley values computing method. The evaluation dataset comprises a set of R instances, i.e.; R input data points. For instance, R is equal to 100. Shapley values capture the marginal contribution of each feature used by a machine learning model. To one input data point corresponds one vector comprising N Shapley values, where N is an integer number representing the total number of features of the model. Shapley values indicate the importance of a feature for a given model inference.

For instance, the Shapley values computing method may be chosen among a Powerset Shapley values (PWS) computation, the Shapley Flow method, a computation of asymmetric Shapley values (ASV), a computation of sampling Shapley values. In other words, a plurality of different sets of Shapley values can be computed by taking into account a given sub-dataset among the at least one sub-dataset.

For instance, the Powerset Shapley value $\Phi_i(v)$, for an i-th feature among the features of an ML model of the classifier type outputting an output v, is defined by:

$$\Phi_i(v) = \sum_{S \epsilon N \setminus \{i\}} \frac{|S|! \ (|N| - |S| - 1)!}{|N!|} \left( v(S \cup \{i\}) - v(S) \right)$$

where N designates the total number of features, S designates a subset of features not comprising the i-th feature, v designates the output of the model.

For instance, the sampling Shapley value $\Phi i(v)$, for an i-th feature among the features of an ML model of the classifier type outputting an output v, is defined by:

$$\Phi_i(v) = \sum_{\pi \in \Pi} \frac{1}{|N|!} \left( v(\{j : \pi(j) \leq \pi(i)\}) - v(\{j : \pi(j) < \pi(i)\}) \right)$$

where $\Pi$ is the set of all permutations of the N features of the ML model and $\pi(j) < \pi(i)$ indicates that the j-th feature precedes the i-th feature under $\Pi$.

Advantageously, when the ML model is a Tree-based model, the algorithm Tree Shap can be used to compute efficiently the Shapley values.

Two examples of computation of Shapley values incorporating the causal knowledge are given below. It is recalled here that the concept of Shapley values originates from the cooperative game theory. The features of a ML model correspond to players of a cooperative game.

In the first example, the Shapley values computing method is a computation of asymmetric Shapley values (ASV). Asymmetric Shapley values consider a partial knowledge of the causal links existing in the data, in other words, the knowledge that some variables are causal ancestors of other features. Leveraging this information, the computation of ASV limits the computation of marginal contributions to only consider permutations of players which are consistent with the causal knowledge (more specifically with the known causal ordering).

A weighting scheme for a permutation $\pi$ is defined as follows:

$$w(\pi) \propto \begin{cases} 1 \; if \; \pi(i) < \pi(j) \; for \; any \; known \; ancestor \; i \; of \; descendant \; j \\ 0 \; otherwise \end{cases}$$

The Shapley value $\Phi_i(v)$ for an $i^{th}$ feature of a ML model receiving as input N features and outputting a class (or decision) v can then be computed as:

$$\Phi_i(v) = \sum_{\pi \in \Pi} \frac{w(\pi)}{|N|!} \left( v(j : \pi(j) \leq \pi(i)) - v(j : \pi(j) < \pi(i)) \right).$$

The second example pertains to the use of the Shapley flow method. This method adapts the explained function to use the edge of the causal graph as a parameter. The Shapley values are determined by this method on the paths from source nodes to the target node, i.e., the sink, in the causal graph. This method determines Shapley values for paths of the causal graph. The Shapley flow value of a path is the mean marginal contribution of a path over the permutations of all paths following a depth-first search (dfs) over the permuted nodes.

The Shapley value for an $i^{th}$ path is:

$$\Phi_v(i) = \sum_{\pi \in \Pi_{dfs}} \frac{\left( v(j : \pi(j) \leq \pi(i)) - v(j : \pi(j) < \pi(i)) \right)}{|\Pi_{dfs}|},$$

where $\Pi_{dfs}$ designates the ensemble of permutations of the nodes from said source nodes to the sink found by the depth-first search.

Optionally, when the trained model Mt receives as inputs a set of features comprising categorical features, the module 16 is configured, before computing for each sub-dataset Sdi the at least one set Vsik of Shapley values, to encode the categorical features into numerical values. Indeed, the Shapley values computation methods require as input numerical values.

A couple composed of one among the at least one sub-dataset Sdi and one among the at least corresponding set Vsik of Shapley values computed with one specific Shapley values computing method is referred herein as computation environment. Therefore, the module 16 is further configured to provide at least one computation environment.

Optionally, when the trained model Mt receives as inputs a set of features comprising categorical features, the module 16 is configured to encode the categorical features into numerical values.

The encoding of the categorical features can be carried out as follows. A so-called computation dataset comprising a plurality of instances is sampled from the training dataset S. This computation dataset has to be representative of all categorical values of each categorical feature. Shapley values are computed for each instance among the computation dataset, within the corresponding computation environment. For each categorical value of each categorical feature, the mean Shapley values of instances presenting that value for that feature are computed. A function enc(x), with x in instance, is defined as the function that takes as input an instance x and returns the same instance with only the categorical features changed, in which the categorical value is replaced by the mean Shapley value as previously described. The output of the function enc(x) is a vector of dimension the total number of features and comprising only numerical values.

The device 1 further comprises a module 17 configured to determine one optimal computation environment among the at least one computation environment by means of a computation of metrics. The metrics measure, for each computation environment among the at least computation environment, a success rate representative of an ability of this computation environment to provide the counterfactual explanation E.

The module 17 is configured for evaluating the quality of counterfactual explanations regarding the quality and actionability of the counterfactual generation process implemented by the device 1, given one computation environment.

A success rate can also be computed. For instance, the success rate can be defined as the percentage of input data points in the evaluation dataset for which an induced counterfactual has been found and where ultimately the result of the minimum value search led to changing the decision of the trained model Mt.

The set of Shapley values corresponding to the given computation environment and obtained for the set of R input data points of the evaluation dataset is used for the computation of quality metrics. For instance, two metrics can be computed. The first metric is a quantile shift metric. The second metric is a counterfactual ability metric.

The quantile shift metric evaluates the cost and feasibility of a recourse against a decision inferred by the trained model Mt for an input data point within the evaluation dataset. The feasibility is the proportion of input data point for which the device 1 was able to determine an induced counterfactual. The cost is the shift in quantile for each feature that the change from an input data point to the corresponding induced counterfactual creates. It is recalled that a q-quantile is a bin of a partition of a given set of data into q bins having equal probability. The change from an input data point to the corresponding induced counterfactual is called an action. More specifically, the quantile shift metric can be defined as follows: with *x* an input data point within the evaluation dataset (i.e. a vector), *a* an action, i.e. a vector of equal dimension as *x*, *dist* a distance, N the set of all features:

$$Q_{shift}(x + a, x) = dist\left(\langle Q_j(x_j + a_j)\rangle_{j \in N}, \langle Q_j(x_j)\rangle_{j \in N}\right)$$

where $\langle Q_j(x_j + a_j)\rangle_{j \in N}$ and $\langle Q_j(x_j)\rangle_{j \in N}$ are two vectors of dimension N.
where $Q_j(y)$ denotes the q-quantile in which the j-th feature value, for a data point y, is.

In the previous equation, the distance *dist* can be for instance the distance based on one among the norms $L_0$, $L_1$, $L_2$, $L_{inf}$.

Therefore, advantageously the quantile shift metric gives additional insight about the density of points around the found induced counterfactual.

The counterfactual ability metric Ability-improvement compares two computation environments $h_1$ and $h_2$ for a given dataset S. More specifically, it represents the mean number of times in which the distance from a data point in the given dataset S to its induced counterfactual within the computation environments hi is smaller than the one obtained within the computation environment $h_2$:

$$Ability - improvement = E_{x \in S - F(x)}$$

$$= 1[CF(x, \Phi_{h1}) > CF(x, \Phi_{h2})] - 1[CF(x, \Phi_{h1}) < CF(x, \Phi_{h2})]$$

where $CF(x, \Phi_h)$ designates a function measuring the distance between the input data point x and its induced counterfactual within the computation environment $\Phi_h$.

In the previous equation, the function CF can use for instance the distance metrics based on one among the norms $L_0$, $L_1$, $L_2$, $L_{inf}$.

Distance metrics based on the norms $L_0$, $L_1$, $L_2$, $L_{inf}$ can also be computed to estimate the distance between an input data point and its induced counterfactual, from which mean values among all the input data points among the evaluation dataset for which an induced counterfactual has been found can also be computed.

In some embodiments, the optimal computation environment corresponds to the best success rate. If success rates for the different computation environments among the at least one computation environment are equivalent, the optimal computation environment may correspond to the one providing the best metrics among the quantile shift metric, the counterfactual ability metric Ability-improvement and/or the distance metrics.

The device 1 further comprises a module 18 configured to determine the counterfactual explanation E based on the original instance $x_i$ and within the optimal computation environment that the module 17 outputs. More specifically, the set of Shapley values computed by the module 16 and corresponding to the optimal computation environment are used.

In the case where the counterfactual explanation E consists of an alternative instance $x_{ic}$, i.e., a set of input variables of the trained model Mt, the counterfactual explanation can be determined by means of a minimum value search. The set of Shapley values corresponding to the optimal computation environment is computed for the original instance $x_i$. This set of Shapley values form a vector $v_h$. This vector $v_h$ indicates a direction in the space of the instances, or input data points of the trained model Mt. The alternative instance $x_{ic}$ is the closest instance to the original instance $x_i$ that is classified

$$x_{ic}\epsilon \underset{\lambda\epsilon\mathbb{R}^+}{\operatorname{argmin}} \lambda \times v_h$$

as the opposite decision in the direction induced by this vector $v_h$ : $\qquad$ such that $f(x_{ic}) \neq f(x_i)$, where f denotes the classification function carried out by the trained model Mt.

For instance, an optimization algorithm might be used for the minimum value search.

In the case where the counterfactual explanation E consists of a set of contributing features which most influence the decision outputted by the model, the counterfactual explanation can be determined in the following manner. In some embodiments, the contributing features can be defined as the features values that are different between the original instance $x_i$ and the alternative instance $x_{ic}$ previously described. In other embodiments, the contributing features are the biggest features deduced from the Shapley values for the original instance $x_i$. For instance, if one value is attributed to each feature, the three features that have the biggest Shapley values can be selected as the contributing features.

The device 1 is interacting with a user interface 19, via which information can be entered and retrieved by a user. The user interface 19 includes any means appropriate for entering or retrieving data, information or instructions, notably visual, tactile and/or audio capacities that can encompass any or several of the following means as well known by a person skilled in the art: a screen, a keyboard, a trackball, a touchpad, a touchscreen, a loudspeaker, a voice recognition system.

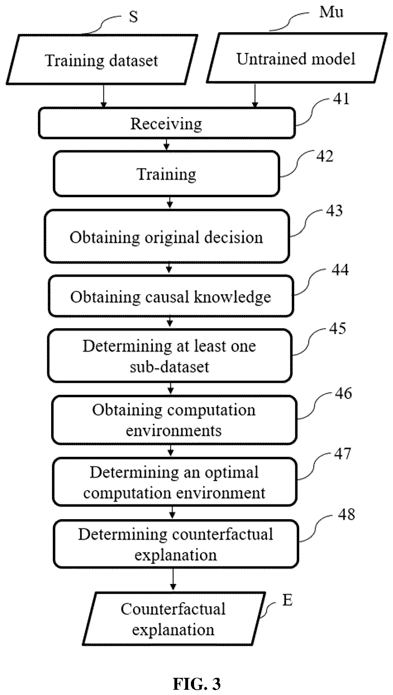

In its automatic actions, the device 1 may for example execute the following process (Figure 3):

- receiving the training dataset S and the untrained model of classifier type Mu (step 41),
- optionally, cleaning the training dataset S,
- training the untrained model of classifier type Mu (step 42),
- implementing the trained model Mt receiving as input an original instance $x_i$ (step 43),
- obtaining the causal knowledge (step 44),
- determining the at least one sub-dataset (step 45),
- obtaining at least one computation environment comprising each among said at least one sub-dataset and a corresponding set of Shapley values relating to the trained model Mt computed via a specific Shapley values computation method (step 46),
- determining one optimal computation environment among the at least one computation environment (step 47),
- determining the counterfactual explanation E (step 48).

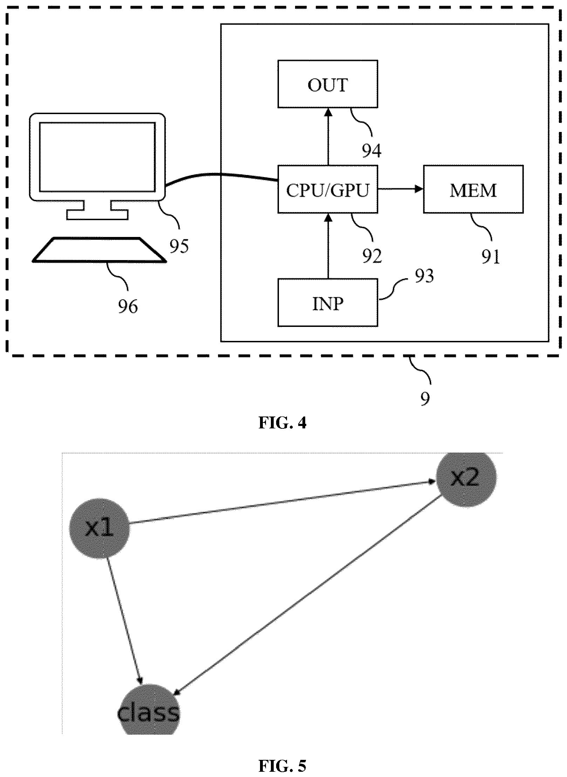

A particular apparatus 9, visible on Figure 4, is embodying the device 1 described above. It corresponds for example to a workstation, a laptop, a tablet, a smartphone, or a head-mounted display (HMD).

The apparatus 9 comprises a memory 91 to store program instructions loadable into a circuit and adapted to cause a circuit 92 to carry out steps of the method of Figure 4 when the program instructions are run by the circuit 92. The memory 91 may also store data and useful information for carrying steps of the present invention as described above.

The circuit 92 may be for instance:

- a processor or a processing unit adapted to interpret instructions in a computer language, the processor or the processing unit may comprise, may be associated with or be attached to a memory comprising the instructions, or
- the association of a processor / processing unit and a memory, the processor or the processing unit adapted to interpret instructions in a computer language, the memory comprising the instructions, or
- an electronic card wherein the steps of the invention are described within silicon, or
- a programmable electronic chip such as a FPGA chip (for « Field-Programmable Gate Array »).

The apparatus 9 may also comprise an input interface 93 for the reception of the training dataset S, and an output interface 94 to provide the counterfactual explanation E and optionally the optimal computation environment. The input interface 93 and the output interface 84 may together correspond to the user interface 19 of Figure 1.

To ease the interaction with the computer, a screen 95 and a keyboard 96 may be provided and connected to the computer circuit 92.

**EXAMPLES**

The present invention is further illustrated by the following examples.

Example 1: Male Adult income prediction

This example deals with the case of the study of male adults income, based on several parameters that are represented in Table 1. The dataset and the causal graph that were used are described in "VACA: designing variational graph autoencoders for causal queries", Sanchez-Martin et al., Thirty-Sixth AAAI Conference on Artificial Intelligence, pages 8159-8168, 2022.

Table 1: Features

| Feature | Value |
|---|---|
| Age | continuous |
| Workclass | Privte, self em not inc, self emp inc, federal gov, local gov, state gov, without pay, never worked |
| Fnlwgt: final weight | Continuous: number of units in the target population that the responding unit represents |
| Education | Bachelors, some coledge, 11$^{th}$, HS grad, Prof. School, Associat, academ., Assoc. voc, 9$^{th}$, 7$^{th}$-8$^{th}$, 12$^{th}$, Masters, 1$^{st}$-4$^{th}$, 10$^{th}$, Doctorate, 5$^{th}$-6$^{th}$, Preschool |
| Education-num | Continuous |
| Marital status | Married-civ-spouse, divorced, never-married, separated, widowed, married spouse absent, married AF Spouse |
| Occupation | Tech-support, Craft repair, other service, sales, exec. Managerial, prof. specialty, handlers-cleanrs, machine op inspct, adm. Clerical, farming-fishing, transport moving, pro. House serv, protective serv., armed forces |
| Relationship | Wife, own-child, husband, not in family, other relative, unmarried |
| Race | White, Asian-Pac-Islnder, Amer-Indian-Eskimo, Other, Black |
| Sex | Female, Male |
| Capital gain | continuous |
| Capital loss | continuous |
| Hours per week | continuous |
| Native country | United-States, Cambodia, England, Puerto-Rico, Canada, Germany, Outlying-US(Guam-USVI-etc), India, Japan, Greece, South, China, Cuba, Iran, Honduras, Philippines, Italy, Poland, Jamaica, Vietnam, Mexico, Portugal, Ireland, France, Dominican-Republic, Laos, Ecuador, Taiwan, Haiti, Columbia, Hungary, Guatemala, Nicaragua, Scotland, Thailand, Yugoslavia, El-Salvador, Trinadad&Tobago, Peru, Hong, Holand-Netherlands | |

An LGBM model is used to predict whether the income of each male adult among the data set is superior or inferior to 50000 \$, in other words to classify each adult into one category, either "superior" (">50k") or "inferior" (">=50k").
Table 2 shows the different metrics for different computation environments as well as the corresponding success rate computed with the device 1 as previously described.
Table 2: evaluation of corresponding evaluation metrics in the case of a binary classification task

| Computation environment | Q-shift | $L_0$ | $L_1$ | $L_2$ | $L_{inf}$ | knn | Success rate |
|---|---|---|---|---|---|---|---|
| ASV + Plab | **0.240** | **8.633** | **0.270** | **0.213** | **0.198** | **1.956** | 30% |
| Samp + Plab | 0.481 | 9.302 | 1.349 | 0.939 | 0.831 | 2.062 | **43%** |
| Flow + Plab | 1.899 | 9.944 | 7.249 | 4.243 | 1.956 | 1.956 | 18% |

The best results are represented in bold font. The "knn" metric measures the mean $L_2$ distance of the induced counterfactual to its k neighbors, which are the k closest instances in the training dataset. It can be observed that depending on the metrics, the optimal computation environment is not always the same.

Example 2: credit assignment procedure with LGBM model

This example deals with the case of a credit assignment procedure implemented automatically with a binary classifier, outputting either an "assigned" label, or an "not assigned label". Upon refusal, a customer has the lawful right to have an explanation for the decision made by the automated decision-making system.

To comply with that demand, the device and corresponding method for providing a counterfactual explanation previously described can be used. A data set comprising synthetic data is used in this example. An LGBM model is used. Two features $x_1$ and $x_2$ as well as a label corresponding to a class are generated as follows.

The feature $x_1$ is drawn from a continuous uniform distribution over the half-open interval [0.0,1.0). The, the feature $x_2$ is defined as $x_2 = x_1^2 + \varepsilon \times 0.6$, where $\varepsilon$ is drawn from a continuous, uniform distribution over the half-open interval [0.0,1.0). Finally, the class (or label) is defined by: $x_1 + 0.5 \times x_2 > 0.75$.

The corresponding causal graph is represented on Figure 5.

Table 3 shows the different metrics for different computation environments as well as the corresponding success rate computed with the device 1 as previously described.

Table 3: evaluation of corresponding evaluation metrics in the case of an automated credit assignment procedure with an LGBM model

| Computation environment | Q-shift | knn (k=10) | $L_1$ | $L_2$ | $L_{inf}$ | Success rate |
|---|---|---|---|---|---|---|
| PWS+ Ppred | **0.142** | **0.337** | 1.540 | 1.191 | 1.086 | **100%** |
| Flow + Ppred | 0.157 | 0.337 | 1.572 | **1.161** | **1.019** | **100%** |
| ASV + Plab | 1.179 | 0.447 | **1.520** | 1.226 | 1.144 | **100%** |

The best results are represented in bold font. It can be observed that depending on the metrics, the optimal computation environment is not always the same.

Example 3: credit assignment procedure with linear regression model

This example corresponds to the same situation as Example 2, where another model of classifier type has been used, namely, a linear regression model.

Table 4 shows the different metrics for different computation environments as well as the corresponding success rate computed with the device 1 as previously described.

Table 4: evaluation of corresponding evaluation metrics in the case of an automated credit assignment procedure with a linear regression model

| Computation environment | Q-shift | knn (k=10) | $L_1$ | $L_2$ | $L_{inf}$ | Success rate |
|---|---|---|---|---|---|---|
| PWS+ Pknn | **0.212** | **0.356** | 1.723 | 1.272 | **1.035** | **100%** |
| Flow + Plab | 0.239 | 0.369 | 1.804 | 1.301 | 1.076 | **100%** |
| ASV + Ppred | 0.231 | 0.385 | **1.614** | **1.212** | 1.052 | **100%** |

The best results are represented in bold font. It can be observed that depending on the metrics, the optimal computation environment is not always the same.

**Claims**

1. A device (1) for providing a counterfactual explanation (E) of an original decision (D) from an automated decision-making system based on a model of classifier type for decision optimization, comprising:

  - at least one input interface configured to receive a training dataset (S) of given distribution;
  - at least one processor configured to:

- train said model (Mu) based on said training dataset (S) so as to obtain a trained model (Mt);
- obtain said original decision (D) from an implementation of said trained model (Mt) receiving as input an instance referred to as original instance ($x_i$);
- obtain causal knowledge relating to said trained model (Mt);
- determine at least one sub-dataset sampled from a so-called prior dataset, said prior dataset being sampled from said given distribution;
- compute, for each among said at least one sub-dataset, at least one corresponding set of Shapley values relating to said model (Mt) by using at least one Shapley values computing method and based on said at least one sub-dataset and said causal knowledge, so as to obtain at least one computation environment, said at least one computation environment comprising one among said at least one sub-dataset and one among said at least one Shapley values computing method;
- determine one optimal computation environment among said at least one computation environment by means of at least one metric representative of an ability of the corresponding computation environment to provide counterfactual explanations;
- determine said counterfactual explanation (E) in the shape of a counterfactual instance or of a set of contributing features by means of the Shapley values corresponding to said original instance ($x_i$) within said optimal computation environment and referred to as optimal Shapley values;

- at least one output interface configured to output said counterfactual explanation (E).

2. The device (1) according to claim **1,** wherein said at least one processor is configured to determine said counterfactual explanation (E) by means of a minimum value search guided by a vector comprising said optimal Shapley values under a constraint, said constraint imposing that a decision outputted by said trained model (Mt) for an instance obtained from a displacement from said original instance along a direction defined by said vector is different from said original decision.

3. The device (1) according to any of the preceding claims, wherein said causal knowledge obtained by said at least one processor is computed by said at least one processor by means of a causal discovery method.

4. The device (1) according to claim **3,** wherein said causal knowledge is a causal graph.

5. The device (1) according to any one of claim **1** to **2,** wherein said causal knowledge obtained by said at least one processor comprises knowledge from at least one expert and is received via said at least one input interface.

6. The device (1) according to any of the preceding claims, wherein the at least one sub-dataset is randomly sampled from said prior dataset and belongs to one among:

- a plurality of instances comprising a label corresponding to a decision different from said original decision (D),
- a plurality of instances associated to decisions inferred by said model (Mt), said inferred decisions being different from said original decision (D),
- a plurality of instances among the k closest neighbors of said original instance according to a predetermined distance metric, said plurality of instances being associated to decisions inferred by said model, said inferred decisions being different from said original decision (D).

7. The device (1) according to any of the preceding claims, wherein, for said at least one sub-dataset, said set of Shapley values is computed by means of at least one heuristic chosen among Shapley Flow, ASV, Powerset Shapley values and sampling Shapley values.

8. The device (1) according to any of the preceding claims, wherein said model (Mt) is a multi-class classifier designed to assign input data points to one of multiple classes, said multiple classes being at least three mutually exclusive classes.

9. The device (1) according to any of the preceding claims, wherein said model is a gradient boosting Tree model.

10. The device (1) according to any of the preceding claims, wherein the automated decision-making system is configured to provide decisions relating to medical predictions, industrial quality inspection, banking, fraud detection, statistics, survey feedback analysis, email spam classification.

11. A computer-implemented method for providing a counterfactual explanation (E) of an original decision (D) from an automated decision-making system based on a model (Mu) of classifier type for decision optimization, said method comprising:

- receiving a training dataset (S) of given distribution;
- training said model (Mu) based on said training dataset (S) so as to obtain a trained model (Mt);
- obtaining said original decision (D) from an implementation of said trained model (Mt) receiving as input an instance referred to as original instance ($x_i$);
- obtaining causal knowledge relating to said model (Mt);
- determining at least one sub-dataset sampled from a so-called prior dataset sampled from said given distribution;
- computing, for each among said at least one sub-dataset, at least one corresponding set of Shapley values relating to said model (Mt) by using at least one Shapley values computing method and based on said at least one sub-dataset and said causal knowledge, so as to obtain at least one computation environment, said at least one computation environment comprising one among said at least one sub-dataset and one among said at least one Shapley values computing method;
- determining one optimal computation environment among said at least one computation environment by means of at least one metric representative of an ability of the corresponding computation environment to provide counterfactual explanations;
- determining said counterfactual explanation (E) in the shape of a counterfactual instance or of a set of contributing features by means of the Shapley values corresponding to said original instance ($x_i$) within said optimal computation environment and referred to as optimal Shapley values.

12. The method according to claim **11,** wherein said method is implemented by a device according to any of claims **1** to **10.**

**FIG. 1**

FIG. 2

S

Mu

Training dataset

Untrained model

Receiving — 41

Training — 42

Obtaining original decision — 43

Obtaining causal knowledge — 44

Determining at least one sub-dataset — 45

Obtaining computation environments — 46

Determining an optimal computation environment — 47

Determining counterfactual explanation — 48

Counterfactual explanation — E

**FIG. 3**

**FIG. 4**

**FIG. 5**

Europäisches
Patentamt

European
Patent Office

Office européen
des brevets

# EUROPEAN SEARCH REPORT

**Application Number**

EP 23 30 6781

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EMANUELE ALBINI ET AL: "Counterfactual Shapley Additive Explanations", ARXIV.ORG, CORNELL UNIVERSITY LIBRARY, 201 OLIN LIBRARY CORNELL UNIVERSITY ITHACA, NY 14853, 16 May 2022 (2022-05-16), XP091215072, DOI: 10.1145/3531146.3533168 * page 1 - page 10, right-hand column, paragraph 2 * * Appendices A-C * | 1-12 | INV. G06N5/045 ADD. G06N20/00 G06N7/01 |
| A | BASTIAN PFEIFER ET AL: "Explaining and visualizing black-box models through counterfactual paths", ARXIV.ORG, CORNELL UNIVERSITY LIBRARY, 201 OLIN LIBRARY CORNELL UNIVERSITY ITHACA, NY 14853, 1 August 2023 (2023-08-01), XP091582308, * page 1 - page 20 * * Appendix A * | 1-12 | |
| A | ZIMMERMANN BASTIEN ET AL: "Improving Drift Detection by Monitoring Shapley Loss Values", 29 May 2022 (2022-05-29), 20220529, PAGE(S) 455 - 466, XP047623507, [retrieved on 2022-05-29] * page 455 - page 465 * | 1-12 | **TECHNICAL FIELDS SEARCHED (IPC)** G06N |
| A | US 2018/121817 A1 (DATTA ANUPAM [US] ET AL) 3 May 2018 (2018-05-03) * the whole document * | 1-12 | |

The present search report has been drawn up for all claims

| Place of search | Date of completion of the search | Examiner |
|---|---|---|
| The Hague | 4 March 2024 | Volkmer, Markus |

EPO FORM 1503 03.82 (P04C01)

**ANNEX TO THE EUROPEAN SEARCH REPORT
ON EUROPEAN PATENT APPLICATION NO.**

**EP 23 30 6781**

This annex lists the patent family members relating to the patent documents cited in the above-mentioned European search report.
The members are as contained in the European Patent Office EDP file on
The European Patent Office is in no way liable for these particulars which are merely given for the purpose of information.

**04-03-2024**

| Patent document cited in search report | Publication date | Patent family member(s) | | Publication date |
|---|---|---|---|---|
| US 2018121817 A1 | 03-05-2018 | EP | 3532966 A1 | 04-09-2019 |
| | | US | 2018121817 A1 | 03-05-2018 |
| | | WO | 2018081671 A1 | 03-05-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SANCHEZ-MARTIN et al.** VACA: designing variational graph autoencoders for causal queries. *Thirty-Sixth AAAI Conference on Artificial Intelligence*, 2022, 8159-8168